# EUROPEAN PATENT SPECIFICATION

(11) **EP 0 388 812 B1**
(45) Date of publication and mention of the grant of the patent: **16.08.1995**
(21) Application number: 90105004.7
(22) Date of filing: 16.03.1990
(51) Int. Cl.: G02B 21/00, G02B 7/16

(54) **Microscope**
Mikroskop
Microscope

(30) Priority: 20.03.1989 JP 68273/89
(43) Date of publication of application: 26.09.1990
(73) Proprietor: OLYMPUS OPTICAL CO., LTD., Tokyo 151 (JP)
(72) Inventor: Nagano, Takashi, Hachiouji-shi, Tokyo (JP); Kojima, Jitsunari, Hachiouji-shi, Tokyo (JP)
(74) Representative: Zenz, Joachim Klaus, Dipl.-Ing.

(56) References cited:
- EP-A- 0 124 241
- DE-A- 3 707 487
- US-A- 4 725 720
- IBM TECHNICAL DISCLOSURE BULLETIN, vol. 32, no. 4A, September 1989, pages 190-193, Armonk, New York, US; "Automatic focus offset-controlled microscope mechanism"

## Description

The present invention relates to an optical microscope according to the preamble of claim 1.

Microscopes which permit observing magnified images of fine samples and recording such images with photographing cameras, video cameras, etc. are widely utilized for studies and inspections in the industrial, biological and other fields of application. The microscopes which are utilized in these fields are generally equipped with a plural number of objective lenses having magnification levels different from one another and attached to a rotary revolver, which is rotated electrically or manually for switching the objective lenses to be set in an observation optical system. However, it is ordinarily impossible to observe a sample in optimum conditions through the individual objective lenses without changing illuminated condition of the sample along with the switching of the objective lenses. Further, the conventional microscopes have a common defect that said microscopes require bringing a sample to be observed into focus each time the objective lenses are switched from one to another, thereby obliging microscopists to consume a longer time for operation of the microscopes than that usable for the studies and inspections that they desire.

In order to correct this defect, U.S. Patent No. 4,661,692, European Patent No. 124,241 and DE 3,707,487 proposed microscopes having improved operability wherein illumination optical systems are automatically exchanged so as to establish an optimum illumination condition along with switching of the objective lenses and samples are brought into focus with automatic focusing mechanisms.

However, the above-mentioned conventional microscopes had another common defect that samples are more or less defocused by the switching operation of the objective lenses due to manufacturing variations or dimensional errors of component parts and said microscopes require refocusing of samples.

The features in the preamble of claim 1 are known from US-A-4 725 720. This microscope is working with an autofocus system and the data input and stored are magnification data which are related to the objective lenses and control the selection thereof. The autofocus system is a rather complicated one. Input and memory means are also known from DE-A-3 707 487. This optical microscope is working with an autofocus system as well. The data are used to control an additional means of the autofocus system for improving the function of the latter. The autofocus system is still more complicated.

In view of the problems described above, it is a primary object of the present invention to provide an microscope which is capable of always establishing favorably focused condition even after objective lenses attached to a revolver are switched from one to another for changing magnification levels for observation and therefore requires no operation for refocusing.

According to the present invention, this object is attained by the features of claim 1.

Initial focusing is performed for each of the objective lenses, whereupon the parafocality position of the member to be moved (the stage or the revolver) is input in the memory means as the parafocality position data specific to each of the objective lenses. Afterwards, when an objective lens is selected, the control means reads out the parafocality position data corresponding to the selected objective lens from the memory means, and focusing operation is performed automatically, as the control means sends a control signal based on the parafocality position data to the focusing means to shift the member to be moved to the set position.

Since the microscope according to the present invention does not require an auto-focusing mechanism, the structure can be simplified. Moreover, a manually-adjusted position can be set as a parafocality position utilizing electric input means; the user can set a parafocality position data as he likes.

The present invention is characterized in that focusing operation is performed with regard to a selected objective lens, by controlling displacement of the member to be moved (the stage or the revolver) numerically based on the manually set parafocality position data corresponding to each of the objective lenses, without utilizing optical autofocusing mechanism.

Additional advantageous features are provided for by the claims 2 to 5.

This and other objects as well as the features and advantages of the present invention will become apparent from the following detailed description of the preferred embodiments when taken in conjunction with the accompanying drawings.
Fig. 1 is a block diagram illustrating an Embodiment 1 of the microscope according to the present invention;
Fig. 2 is a plan view illustrating an example of input means;
Fig. 3 is a plan view descriptive of an example of coupled condition between a rotary revolver and a revolver position detecting sensor;
Fig. 4 is a perspective view illustrating an example of focusing knob;
Fig. 5 is a sectional view descriptive of stage positions in focused conditions of the individual objective lenses;
Fig. 6 is a flow chart illustrating operating sequence of the microscope according to the present invention;
Fig. 7 through Fig. 9 are block diagrams illustrating Embodiments 2 through 4 of the microscope according to the present invention; and
Fig. 10A and Fig. 10B are sectional views descriptive of Embodiment 5 of the microscope according to the present invention.

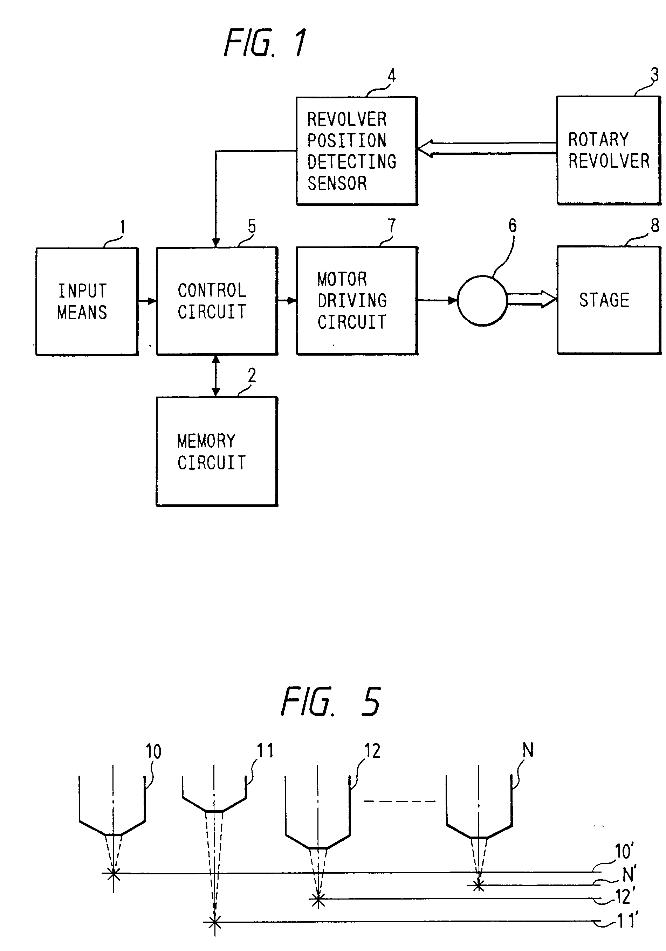

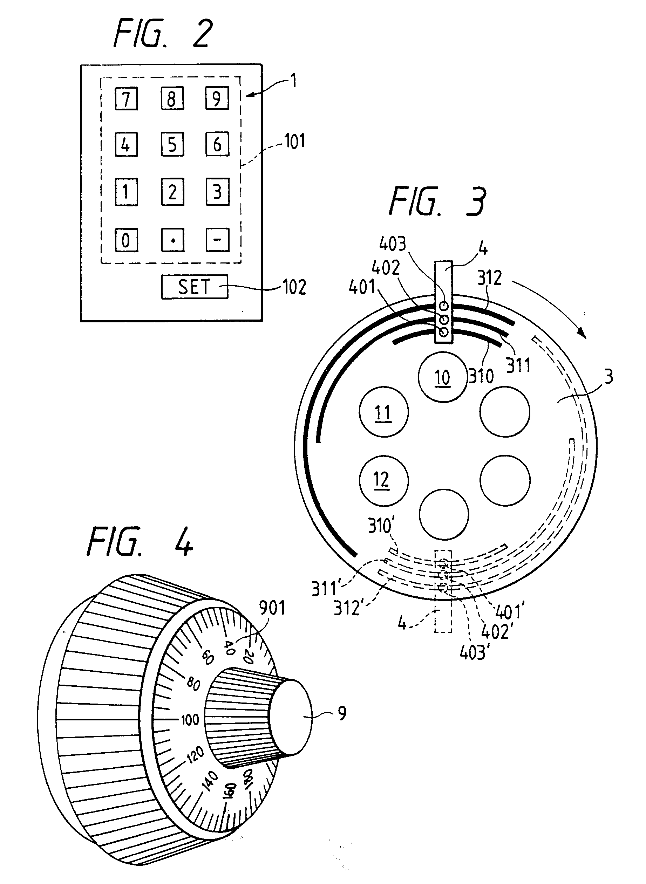

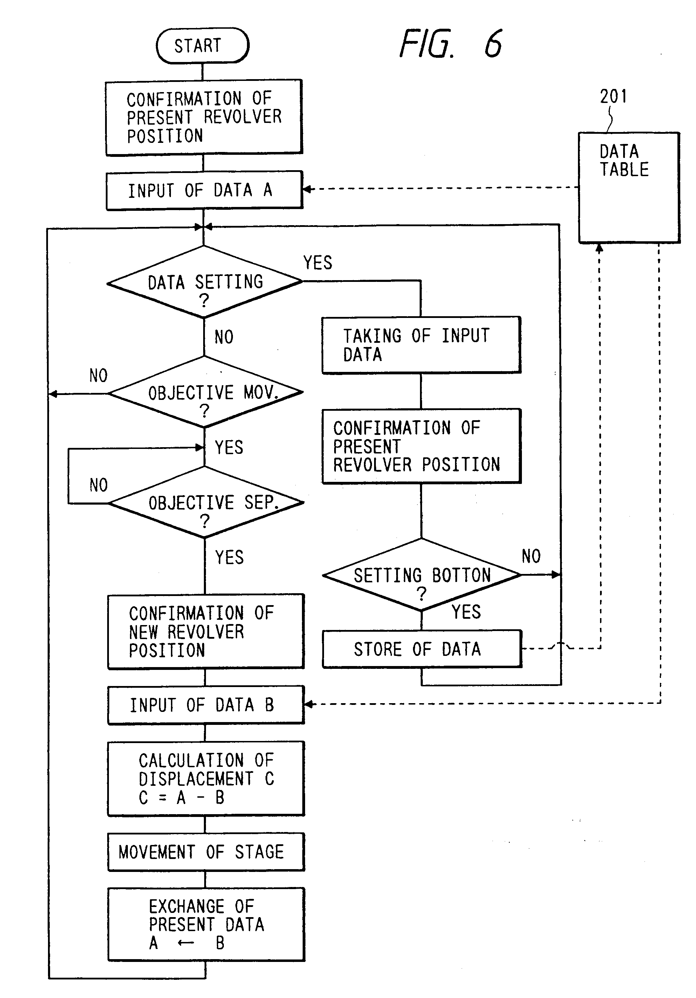

Now, the Embodiment of the microscope according to the present invention will be described with reference to Fig. 1 through Fig. 6. Fig. 1 shows a block diagram of a control system applied to a microscope equipped with a sample stage which is to be moved up and down. In this drawing, the reference numeral 1 represents an input means for inputting objective lens data and stage position data. This input means comprises numerical keys 101 and a setting button 102 for data setting as exemplified by Fig. 2. The reference numeral 2 designates a memory circuit for memorizing inputted data which comprises a data table 201 for storing the data (Fig. 6). The reference numeral 3 denotes a rotary revolver, the reference numeral 4 represents a revolver position detecting sensor for detecting which objective lens is set in the observation optical path, the reference numeral 5 designates a control circuit for processing signals emitted from the memory circuit and the revolver position detecting sensor, the reference numeral 6 denotes a motor for moving a sample stage 8 up and down in accordance with signals emitted from the control circuit 5 through a motor driving circuit 7, and the reference numeral 9 represents a known type focusing knob having engraved divisions 901 and to be used for manually moving the sample stage 8 up and down. In the rotary revolver 3, attached or formed, for example, on or in the movable portion thereof are reflecting plates 310, 311, 321, ··· in shapes of coaxial arcs or slots 310′, 311′, 312′, ··· in shapes of coaxial arcs which are extending over the ranges corresponding to the rotating angles required for bringing objective lenses 10, 11, 12, ··· respectively from the standard positions thereof into the optical path. When a plural number of reflection type sensors 401, 402, 403, ··· are used as the revolver position detecting sensor 4, a plural number of the arc-shaped reflecting plates 310, 311, 312, ··· are arranged at the positions corresponding to these sensors respectively or when a plural number of transmission type sensors 401′, 402′, 403′, ··· are used as the revolver position detecting sensor 4, a plural number of the arc-shaped slots 310′, 311′, 312′ are formed at the positions corresponding to the sensors respectively, thereby making the control circuit capable of detecting which objective lens is set in the optical path.

Now, function of the Embodiment 1 will be explained below.

First, description will be made on procedures for inputting data. The rotary revolver 3 is generally equipped with four to six objective lenses which have focused positions different from one another due to not only focal lengths of the respective objective lenses but also working precision of the revolver. Fig. 5 schematically shows stage positions 10′, 11′, 12′, ···, N′ in focused conditions of objective lenses 10, 11, 12, ···, N′. It is therefore necessary to record the stage positions corresponding to the focused conditions of the individual objective lenses as data specific thereto into the data table 201. These data are to be inputted in the procedures described below. Now, let us assume that the objective lens 10 is taken as standard. First, the sample stage 8 is moved by turning the focusing knob 9 until the stage position 10′ corresponding to the objective lens 10 is attained. In this case, moving distance of the sample stage 8 can be read on a graduated dial 901 and a numerical data "0" must be inputted by the input means 1 for setting the position of the sample stage 8 as the origin. This data is inputted by depressing the button "0" out of the numerical keys 101 and then depressing the setting button 102. Upon depressing the setting button 102, the revolver position at that time is recorded into the data table 201 of the memory circuit 2 together with the stage position data ("0" in this case for indicating the standard position) under cooperating functions between the reflecting plates 311, 312, 313, ··· and the sensors 401, 402, 403, ··· or cooperating functions between the slots 311′, 312′, 313′, ··· and the sensors 401′, 402′, 403′, ···. Then, the objective lens 11 is brought into the optical path in place of the objective lens 10 by rotating the revolver 3 in the direction indicated by the arrow in Fig. 3 and the sample stage 8 is moved once again by turning the focusing knob 9 until the objective lens 11 is brought into focus. In this case also, moving distance of the sample stage 8 can be read on the graduated dial 901, and a numeral value representing the moving distance is inputted by using the input means 1 and recorded as stage position data together with the revolver position data at this time into the data table 201 of the memory circuit 2 by depressing the setting button 102. Further, the similar procedures are repeated for each of the objective lens 12 and all the rest objective lenses attached to the revolver 3 for recording revolver position and stage position data at the focussed condition into the data table 201.

Now operating procedures for the Embodiment 1 will be described especially with reference to Fig. 6. When a power source switch (not shown) arranged on the microscope is turned ON, the revolver position corresponding to the objective lens 10, for example, which is set in the optical path is confirmed by the revolver position detecting sensor 4. The control circuit 5 reads out the stage position data corresponding to the confirmed revolver position (hereinafter referred to as data A) from the data table 201 of the memory circuit 2. If the data is inputted by the input means 1 and the setting button 102 is depressed at this step, the revolver position at this time and the inputted data are recorded into the data table 201 as described above. In contrast, when the revolver 3 is rotated without performing the above-described inputting operations and the objective lens 11, for example, is brought into the observation optical path, the new revolver position is confirmed by the revolver position detecting sensor 4 and the control circuit 5 reads out the stage position data corresponding to the newly confirmed revolver position (hereinafter referred to as data B) from the data table 201 of the memory circuit 2. The control circuit 5 calculates a moving distance C for the stage on the basis of the data A and the data B, and outputs the calculation result to the motor driving circuit 7 for correcting defocused condition by moving the sample stage 8 for the distance C. Since the data A is held in the control circuit 5 in this condition, the current data A is replaced with the data B to set the control circuit 5 in a state ready for the next revolver rotation or data inputting. A single operating sequence to correct defocused condition caused by switching the objective lenses and by woarking precision of the revolver is completed in this way. Accordingly, the Embodiment 1 of the present invention provides a microscope which requires no focusing operation after switching the objective lenses from one to another in practice and can assure high operability.

In addition, even when the height to be brought into good focus is varied by exchange of samples, for example, it is sufficient to perform the focusing operation only for any one of the objective lenses attached to the rotary revolver since the Embodiment 1 is so adapted as to read out the differences in height of the sample stage for the individual objective lenses and correct only the differences in height of the sample stage as described above.

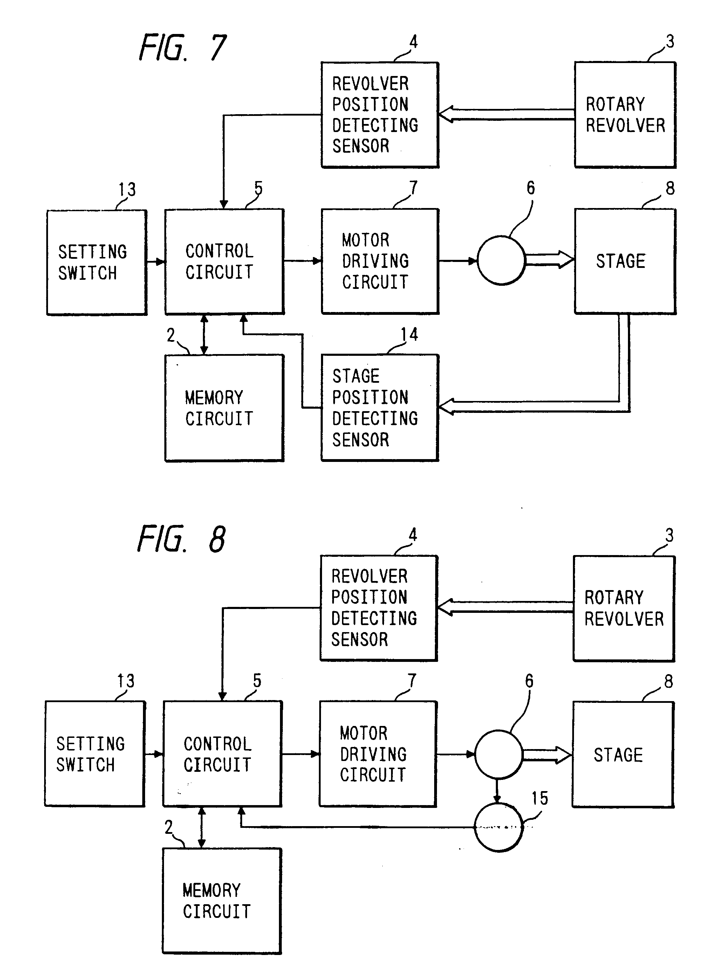

Fig. 7 is a block diagram of a control system used in the Embodiment 2 of the present invention. The Embodiment 2 uses the revolver position detecting system and the sample stage driving system which are the same as those in the Embodiment 1, but adopts a stage position detecting sensor 14 arranged at the location corresponding to the sample stage 8 for facilitating input of the objective lens data and the stage position data. Speaking concretely, the Embodiment 2 is designed as a type which eliminates the necessity to set standard value, or detects the stage positions corresponding to focused conditions of the objective lenses in a form of absolute values. In this case, the stage positions can be detected by reading out the divisions on the graduated scale 901 or rotating angles of the focusing knob 9. As for data inputting procedures for the Embodiment 2, a surface of a sample placed on the stage 8 is brought into focus with one of objective lenses attached to the revolver 3 set in the optical path and a setting switch 13 is depressed for reading and storing the objective lens data at that time and stage position data from the stage detecting position sensor 14 into the control circuit 5 and the memory circuit 2 respectively. Data input can be completed by repeating these procedures for all the objective lenses that are attached to the rotary revolver. Functions of the Embodiment 2 are similar to those of the Embodiment 1. Speaking concretely, when the objective lenses are switched from one to another by rotating the rotary revolver 3, the stage position data provided from the stage position detecting sensor 14 and the stage position data for the newly selected objective lens stored in the memory circuit 2 are read into the control circuit 2 for calculation, a motor rotation degree is determined on the basis of the calculation result, the motor 6 is driven by the motor driving circuit 7 and the sample stage is moved for correcting defocused condition. The Embodiment 2 which is equipped with the stage position sensor 14 always permits confirming current stage position and correcting defocused condition, should the stage 8 be shocked and displaced upward or downward, thereby assuring operability more excellent than that of the Embodiment 1.

Fig. 8 shows a block diagram of a control system adopted for the Embodiment 3 of the present invention. The Embodiment 3 is so adapted, like the Embodiment 2, as to permit detecting position of the sample stage 8. However, the Embodiment 3 performs the detection of the stage position by using an encoder 15 connected to the motor 6, in place of the stage position detecting sensor 14 adopted in the Embodiment 2, and is so adapted as to store output of the encoder 15 as the stage position data into the memory circuit 2. accordingly, the Embodiment 3 has functions similar to those of the Embodiment 2. In the Embodiment 3, the control circuit 5 always monitors the stage position data (encoder value) for the objective lens newly set into the observation optical path which is preliminarily stored in the memory circuit 2 and current stage position data fed back from the motor 6 (encoder value), and the stage driving circuit 7 drives the motor 6 so as to move the stage 8 for correcting defocused condition.

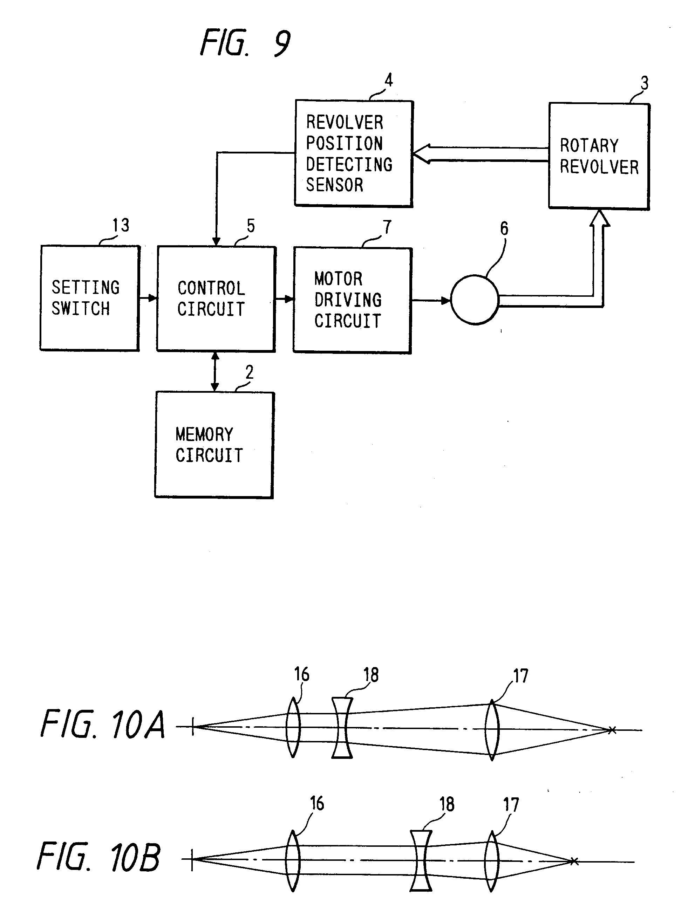

Fig. 9 is a block diagram illustrating a control system selected for the Embodiment 4 of the present invention. The Embodiment 4 is similar to the Embodiment 3 in the principle of operation, functions, effect, etc., but so adapted as to perform the correction of defocused condition by moving the rotary revolver 3 up and down, unlike the Embodiment 3 which performs the correction of defocused condition by moving the sample stage up and down. As for the functions of the Embodiment 4 for correcting defocused condition, the revolver position detecting sensor 4 detects rotating position of the revolver, i.e., data on the objective lens newly set in the observation optical path and current height of the revolver 3, the control circuit 5 compares the height with the revolver height data for the objective lens newly set in the observation optical path which is stored in the memory circuit 2 and determines vertical moving distance for the revolver, and the motor driving circuit7 drives the motor 7 to move the revolver up or down. Accordingly, the Embodiment 4 is a microscope which requires no focusing operation after rotating the revolver and has high operability.

Fig. 10 illustrates an objective lens system used in the Embodiment 5 of the present invention. Unlike the Embodiments 1 through 4 described above, the Embodiment 5 is equipped, for each of the objective lenses attached to the rotary revolver 3, with a defocus correcting mechanism which is used for correcting defocused condition of each objective lens at the stage to attach the objective lens to the revolver 3 or the preparatory stage for microscopy. The objective lens system is composed of a first lens component 16 for allowing incidence of light from a sample, a second lens component 17 for forming the image to be observed and a focusing lens component 18 arranged for adjusting imaging point back and forth. When the focusing lens component 18 is displaced toward the first lens component 16 as shown in Fig. 10A, the imaging point becomes away from the second lens component 17, and when the focusing lens component 18 is moved toward the second lens component 17 as shown in Fig. 10B, the imaging point is shifted toward the second lens component 17. By equipping each objective lens with such a mechanism as to move the focusing lens component as described above and preliminarily correcting defocused condition of the objective lens, it is possible to obtain a microscope which requires no tedious procedures for focusing after changing observation magnification levels by rotating the rotary revolver and has high operability, thereby allowing microscopists to be devoted exclusively to microscopy.

## Claims

1. An optical microscope comprising detecting means (4) for detecting any one of a plurality of objective lenses (10, 11, 12); an electric revolver (3) having switching means for switching said plurality of objective lenses; and focusing means (6) for moving a stage (8) or said revolver (3) along an optical axis to focus each of said plurality of objective lenses (10, 11, 12) attached to said revolver (3), wherein said optical microscope further comprises input means (1) for inputting data, memory means (2) for storing the data input by said input means and control means;
characterized in that the memory means is arranged to store inputted data representing a parafocality position along the optical axis of said stage or revolver corresponding to the focussed condition of each of said plurality of objective lenses,
and in that the control means (5) is connected to the input means (1) and the memory means (2), which control means (5) reads the parafocality position of the one of the objective lenses (10, 11, 12) inserted in the optical path upon switching the lenses by the electric revolver (3) and outputs a control signal to the focusing means (6) to cause the latter to move said stage (8) or revolver (3) along the optical axis to the parafocality position previously input and read-out such that the switched objective lens maintains parafocality.

2. The optical microscope according to claim 1, characterized in that said focusing means (6) is a motor for driving said stage (8) or said revolver (3) along the optical axis.

3. The optical microscope according to claim 1 or 2, characterized in that said stage (8) or said revolver (3) is equipped with a position detecting sensor (14).

4. The optical microscope according to claim 3, characterized in that said motor (6) is controlled so that the position data from said position detecting sensor (14) of said stage (8) or said revolver (3) are equal to the parfocality position fetched from said memory means (2).

5. The optical microscope according to claim 1, characterized in that each of said objective lens includes a first lens component (16) allowing incidence of light from a sample, a second lens component (17) for forming an image to be observed and a focusing lens (18), variably disposed between said first and second lens components, for varying a location of an imaging point where said image to be observed is located.

## Patentansprüche

1. Optisches Mikroskop mit einer Detektoreinrichtung (4) zum Detektieren einer von mehreren Objektivlinsen (10, 11, 12); einem elektrischen Revolver (3), der eine Schalteinrichtung zum Umschalten zwischen den Objektivlinsen aufweist; und mit einer Fokussiereinrichtung (6) zum Bewegen eines Objektträgers (8) oder des Revolvers (3) entlang einer optischen Achse, um jede der an dem Revolver (3) befestigten Objektivlinsen (10, 11, 12) zu fokussieren, wobei das optische Mikroskop außerdem eine Eingabeeinrichtung (1) zur Eingabe von Daten, eine Speichereinrichtung (2) zum Speichern der mittels der Eingabeeinrichtung eingegebenen Daten und eine Steuereinrichtung aufweist;
**dadurch gekennzeichnet**,
daß die Speichereinrichtung so angeordnet ist, daß sie eingegebene Daten speichert, die eine Parafokalitätsposition entlang der optischen Achse des Objektträgers oder des Revolvers darstellen, wobei die Parafokalitätsposition der fokussierten Einstellung jeder der Objektivlinsen entspricht, und
daß die Steuereinrichtung (5) mit der Eingabeeinrichtung (1) und der Speichereinrichtung (2) verbunden ist, wobei die Steuereinrichtung (5) die Parafokalitätsposition derjenigen Objektivlinse (10, 11, 12) liest, die beim Umschalten der Linsen mit dem elektrischen Revolver (3) in den Strahlengang eingefügt wurde, und wobei die Steuereinrichtung (5) ein Steuersignal an die Fokussiereinrichtung (6) ausgibt, um letztere zu veranlassen, den Objektträger (8) oder den Revolver (3) entlang der optischen Achse zu der zuvor eingegebenen und ausgelesenen Parafokalitätsposition so zu bewegen, daß die umgeschaltete Objektivlinse ihre Parafokalität beibehält.

2. Optisches Mikroskop nach Anspruch 1, dadurch gekennzeichnet, daß die Fokussiereinrichtung (6) ein Motor zum Bewegen des Objektträgers (8) oder des Revolvers (3) entlang der optischen Achse ist.

3. Optisches Mikroskop nach Anspruch 1 oder 2, dadurch gekennzeichnet, daß der Objektträger (8) oder der Revolver (3) mit einem Positionserfassungssensor (14) ausgestattet ist.

4. Optisches Mikroskop nach Anspruch 3, dadurch gekennzeichnet, daß der Motor (6) derart gesteuert wird, daß die Positionsdaten von dem Positionserfassungssensor (14) des Objektträgers (8) oder des Revolvers (3) gleich der aus der Speichereinrichtung (2) herangeholten Parafokalitätsposition sind.

5. Optisches Mikroskop nach Anspruch 1, dadurch gekennzeichnet, daß jede Objektivlinse eine den Lichteinfall von einer Probe ermöglichende erste Linsenkomponente (16), eine das zu betrachtende Bild erzeugende zweite Linsenkomponente (17) und eine Fokussierlinse (18) aufweist, die zwischen der ersten und der zweiten Linsenkomponente variabel angeordnet ist, um den Ort desjenigen Bildpunktes zu variieren, wo das zu betrachtende Bild angeordnet ist.

## Revendications

1. Microscope optique comprenant un moyen de détection (4) pour détecter l'une quelconque d'une pluralité de lentilles d'objectif (10, 11, 12) ; un revolver électrique (3) ayant un moyen de commutation pour commuter ladite pluralité de lentilles d'objectif ; et un moyen de focalisation (6) pour déplacer un étage (8) ou ledit revolver (3) le long d'un axe optique pour focaliser chaque lentille de ladite pluralité de lentilles d'objectif (10, 11, 12) fixées audit revolver (3), dans lequel ledit microscope optique comprend en outre un moyen d'entrée (1) pour entrer des données, un moyen de mémorisation (2) pour stocker les données entrées par ledit moyen d'entrée ; et un moyen de commande ;
caractérisé en ce que le moyen de mémorisation est agencé pour stocker des données entrées représentant une position de parafocalité le long de l'axe optique dudit étage ou du revolver correspondant à l'état focalisé de chaque lentille de ladite pluralité de lentilles d'objectif,
et en ce que le moyen de commande (5) est connecté au moyen d'entrée (1) et au moyen de mémorisation (2), ce moyen de commande (5) lisant la position de parafocalité de celle des lentilles d'objectif (10, 11, 12) qui est insérée dans le chemin optique lors de la commutation des lentilles par le revolver électrique (3) et envoyant un signal de commande au moyen de focalisation (6) pour forcer ce dernier à déplacer ledit étage (8) ou le revolver (3) le long de l'axe optique, pour atteindre la position de parafocalité entrée préalablement et lue, de manière que la lentille d'objectif commutée maintienne la parafocalité.

2. Microscope optique selon la revendication 1, caractérisé en ce que ledit moyen de focalisation (6) est un moteur pour entraîner ledit étage (8) ou ledit revolver (3) le long de l'axe optique.

3. Microscope optique selon la revendication 1 ou 2, caractérisé en ce que ledit étage (8) ou ledit revolver (3) est pourvu d'un capteur de détection de position (14).

4. Microscope optique selon la revendication 3, caractérisé en ce que ledit moteur (6) est commandé de manière que les données de position provenant dudit capteur de détection de position (14) dudit étage (8) ou dudit revolver (3) soient égales à la position de parafocalité lue dans ledit moyen de mémorisation (2).

5. Microscope optique selon la revendication 1, caractérisé en ce que chacune desdites lentilles d'objectif comprend un premier composant de lentille (16) permettant l'incidence d'une lumière provenant d'un échantillon, un deuxième composant de lentille (17) pour former une image à observer et une lentille de focalisation (18), disposée de manière variable entre lesdits premier et deuxième composants, pour faire varier l'emplacement d'un point de formation d'image où se situe ladite image à observer.
